# EUROPEAN PATENT APPLICATION

(11) **EP 4 485 606 A1**
(43) Date of publication of application: **01.01.2025**
(21) Application number: 23807672.3
(22) Date of filing: 17.05.2023
(51) Int. Cl.: H01M 10/058, H01G 11/26, H01G 11/46, H01M 4/13, H01M 10/052, H01M 4/36, H01M 4/505, H01M 4/525

(54) **NONAQUEOUS ELECTROLYTE POWER STORAGE ELEMENT**

(30) Priority: 20.05.2022 JP 2022083339
(71) Applicant: GS Yuasa International Ltd., Kisshoin, Minami-ku, Kyoto-shi, Kyoto 601-8520 (JP)
(72) Inventor: KAWASOE, Yudai, Kyoto-shi, Kyoto 601-8520 (JP); OHSUGI, Yuta, Kyoto-shi, Kyoto 601-8520 (JP); MATSUYOSHI, Tsubasa, Kyoto-shi, Kyoto 601-8520 (JP); MIZUTA, Yusuke, Kyoto-shi, Kyoto 601-8520 (JP)
(74) Representative: Isarpatent
(86) International application number: PCT/JP2023/018451
(87) International publication number: WO 2023/224071

(57) **Abstract**

A nonaqueous electrolyte energy storage device according to one aspect of the present invention includes a positive electrode having a positive active material layer and a negative electrode having a negative active material layer, in which the positive active material layer contains a positive active material containing a tungsten element, a mass per unit area of the negative active material layer is 3.8 mg/cm² or more and 4.8 mg/cm² or less, and the negative active material layer has an average thickness of 30 pm or more.

## Description

### TECHNICAL FIELD

The present invention relates to a nonaqueous electrolyte energy storage device.

### BACKGROUND ART

Nonaqueous electrolyte secondary batteries typified by lithium ion secondary batteries are often used for electronic devices such as personal computers and communication terminals, motor vehicles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. In addition, capacitors such as lithium ion capacitors and electric double-layer capacitors are also widely in use as nonaqueous electrolyte energy storage devices other than the nonaqueous electrolyte secondary batteries.

As a positive active material for a nonaqueous electrolyte energy storage device, a lithium transition metal composite oxide, a polyanion compound or the like is used. In order to improve the performance of the nonaqueous electrolyte energy storage device, or the like, for example, the surfaces of the particles of the positive active material are coated with another compound. Patent Document 1 describes a positive electrode material for a lithium secondary battery in which a particle surface of a lithium-manganese composite oxide is coated with a metal oxide such as titanium oxide or tin oxide.

### PRIOR ART DOCUMENT

### PATENT DOCUMENT

Patent Document 1: JP-A-2001-6676

### SUMMARY OF THE INVENTION

### PROBLEMS TO BE SOLVED BY THE INVENTION

It is desirable that the nonaqueous electrolyte energy storage device has a large input at the initial stage, and the input is hardly reduced even after the nonaqueous electrolyte energy storage device is stored in a high temperature environment. The input refers to energy (power: W) that can be taken in per unit time by the nonaqueous electrolyte energy storage device during charging. In other words, the input is input power during charging.

An object of the present invention is to provide a nonaqueous electrolyte energy storage device having a large initial input and a high input retention ratio after storage in a high temperature environment.

### MEANS FOR SOLVING THE PROBLEMS

A nonaqueous electrolyte energy storage device according to one aspect of the present invention includes a positive electrode having a positive active material layer and a negative electrode having a negative active material layer, in which the positive active material layer contains a positive active material containing a tungsten element, a mass per unit area of the negative active material layer is 3.8 mg/cm² or more and 4.8 mg/cm² or less, and the negative active material layer has an average thickness of 30 pm or more.

### ADVANTAGES OF THE INVENTION

According to one aspect of the present invention, it is possible to provide a nonaqueous electrolyte energy storage device having a large initial input and a high input retention ratio after storage in a high temperature environment.

### BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus including a plurality of nonaqueous electrolyte energy storage devices.

### MODE FOR CARRYING OUT THE INVENTION

First, the outline of a nonaqueous electrolyte energy storage device disclosed in the present specification will be described.
[1]: A nonaqueous electrolyte energy storage device according to one aspect of the present invention includes a positive electrode having a positive active material layer and a negative electrode having a negative active material layer, in which the positive active material layer contains a positive active material containing a tungsten element, a mass per unit area of the negative active material layer is 3.8 mg/cm² or more and 4.8 mg/cm² or less, and the negative active material layer has an average thickness of 30 pm or more.

The nonaqueous electrolyte energy storage device according to the above [1] has a large initial input and a high input retention ratio after storage in a high temperature environment. The reasons therefor are not clear, but the following reasons are presumed. By using the positive active material containing a tungsten element, the resistance of the positive electrode decreases, and the initial input of the nonaqueous electrolyte energy storage device increases. However, when the nonaqueous electrolyte energy storage device is stored in a high temperature environment, the tungsten element contained in the positive active material is eluted into the nonaqueous electrolyte. The eluted tungsten element deposits on the negative electrode, which causes an increase in resistance of the negative electrode. As a result, the input of the nonaqueous electrolyte energy storage device decreases. In addition, the eluted tungsten element is more likely to be deposited on the surface side of the negative active material layer. Here, when the mass per unit area of the negative active material layer is small and the negative active material layer is thin, the entire negative active material layer is easily affected by the deposition of the tungsten element, and the resistance of the negative electrode is further increased. Therefore, by increasing the mass per unit area of the negative active material layer and increasing the thickness of the negative active material layer, the effect of the deposition of the tungsten element in the negative active material layer is limited on the surface side, and the resistance of the negative electrode can be suppressed from increasing. However, when the mass per unit area of the negative active material layer is too large, the thickness of the tungsten element deposition layer per unit area deposited on the surface side of the negative active material layer becomes too thick, so that the movement of charge transport ions is inhibited, and thus the resistance of the negative electrode after storage in a high temperature environment increases. In the nonaqueous electrolyte energy storage device according to the above [1], since the mass per unit area of the negative active material layer is 3.8 mg/cm² or more and 4.8 mg/cm² or less, and the negative active material layer has an average thickness of 30 pm or more, it is presumed that the resistance of the negative electrode after storage in a high temperature environment is suppressed from increasing, and the input retention ratio is high.

As will be described later, according to the study of the present inventors, it has been confirmed that the improvement of the input retention ratio by specifying the mass per unit area of the negative active material layer in the range of 3.8 mg/cm² or more and 4.8 mg/cm² or less does not show the same tendency when the positive active material containing no tungsten element is used. Therefore, by specifying the mass per unit area of the negative active material layer in a specific range and applying the negative active material layer in combination with the positive active material containing a tungsten element, as a specific effect by such combination, a nonaqueous electrolyte energy storage device in which the input retention ratio after storage in a high temperature environment is greatly improved can be provided.

The "mass per unit area of the negative active material layer" and the "average thickness of the negative active material layer" refer to a mass per unit area of one negative active material layer and an average thickness of one negative active material layer. For example, when the negative electrode has a negative substrate with the negative active material layer provided on each of both surfaces of the negative substrate, the "mass per unit area of the negative active material layer" and the "average thickness of the negative active material layer" are a mass per unit area and an average thickness of the negative active material layer on one surface. Also, the "average thickness" of the negative active material layer refers to the average value of thicknesses measured at arbitrary ten points of the negative active material layer.

[2]: In the nonaqueous electrolyte energy storage device according to the above [1], a ratio of a mass per unit area of the negative active material layer to a mass of the tungsten element per unit area contained in the positive active material layer may be 30 or more. As described above, when the mass per unit area of the negative active material layer is sufficiently large with respect to the mass of tungsten element per unit area in the positive active material layer, the effect of the deposition of the tungsten element in the negative active material layer is more limited to the surface side, and the amount of the tungsten element per unit area of the negative active material layer deposited on the surface side of the negative active material layer is also smaller, so that the nonaqueous electrolyte energy storage device according to the above [2] further increases the input retention ratio after storage in a high temperature environment. The "mass of tungsten element per unit area contained in the positive active material layer" refers to the mass of tungsten element per unit area contained in one positive active material layer. For example, when the positive electrode has a positive substrate with the positive active material layer provided on each of both surfaces of the positive substrate, the "mass of tungsten element per unit area contained in the positive active material layer" is a mass of tungsten element per unit area contained in the positive active material layer on one surface.

[3]: In the nonaqueous electrolyte energy storage device according to the above [1] or [2], the negative active material may have a porosity of 40% or more. In the nonaqueous electrolyte energy storage device according to [3], by setting the porosity of the negative active material layer to 40% or more, the input retention ratio after storage in a high temperature environment is further enhanced.

The "porosity (%)" of the negative active material layer is determined by a calculation formula of (1 - V₂/V₁) × 100, where an apparent volume (volume including voids) of the negative active material layer is defined as V₁ and a sum of actual volumes of materials constituting the negative active material layer is defined as V₂. The sum V₂ of actual volumes of the materials constituting the negative active material layer can be calculated from the content of each material in the negative active material layer and the true density of each material.

A nonaqueous electrolyte energy storage device, an energy storage apparatus, and a method for manufacturing a nonaqueous electrolyte energy storage device according to an embodiment of the present invention, and other embodiments will be described in detail. The names of the respective constituent members (respective constituent elements) for use in the respective embodiments may be different from the names of the respective constituent members (respective elements) for use in the background art.

### <Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is typically a stacked type obtained by stacking a plurality of positive electrodes and a plurality of negative electrodes with separators interposed therebetween, or a wound type obtained by winding a positive electrode and a negative electrode stacked with a separator interposed therebetween. The nonaqueous electrolyte is present with the positive electrode, negative electrode, and separator impregnated with the electrolyte. A nonaqueous electrolyte secondary battery (hereinafter, also referred to simply as a "secondary battery") will be described as an example of the nonaqueous electrolyte energy storage device.

### (Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁷ Ω cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive electrode substrate is preferably 3 pm or more and 50 pm or less, more preferably 5 pm or more and 40 pm or less, still more preferably 8 µm or more and 30 pm or less, and particularly preferably 10 pm or more and 25 pm or less. By setting the average thickness of the positive substrate to the above range, it is possible to enhance the energy density per volume of a secondary battery while increasing the strength of the positive substrate.

The intermediate layer is a layer arranged between the positive electrode substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder (binding agent), a thickener, a filler, or the like as necessary.

The positive active material contains a tungsten element. This tungsten element may be present, for example, in the form of a compound such as an oxide (WO₃). The compound containing a tungsten element covers at least a part of the surface of particles of a substance capable of occluding and releasing charge transport ions such as lithium ions, for example. In other words, the positive active material may contain a substance capable of occluding and releasing charge transport ions and a compound containing a tungsten element. The positive active material may be substantially composed only of a substance capable of occluding and releasing charge transport ions and a compound containing a tungsten element. The substance capable of occluding and releasing charge transport ions itself may contain a tungsten element. The tungsten element may be present, for example, on the surfaces of the particles of the positive active material. The tungsten element may be present inside the particles of the positive active material. As described above, when the positive active material contains a tungsten element, side reactions in the positive electrode can be suppressed, and conductivity of charge transport ions such as lithium ions can be improved. As a result, the input of the nonaqueous electrolyte energy storage device can be improved. As a form in which a tungsten element is contained in the positive active material, there is a form in which a compound containing a tungsten element is coated on a particle surface of a substance capable of occluding and releasing charge transport ions. In addition, there is also a form in which a tungsten element is added at the time of synthesis of a substance capable of occluding and releasing charge transport ions, and firing is performed, so that a compound containing a tungsten element is supported on the particle surface of the positive active material or contained inside the particle. As the positive active material containing a tungsten element, a commercially available product may be used.

As the substance capable of occluding and releasing charge transport ions, a substance capable of occluding and releasing lithium ions is preferable, and a conventionally known positive electrode material can be used as these substances. Examples of such a substance include lithium-transition metal composite oxides that have an α-NaFeO₂-type crystal structure, lithium-transition metal oxides that have a spinel-type crystal structure, polyanion compounds, chalcogenides, and sulfur. Examples of the lithium-transition metal composite oxides that have an α-NaFeO₂-type crystal structure include Li[LiₓNi₍₁₋ₓ₎]O₂ (0 ≤ x < 0.5), Li[LiₓNi_{γ}Co_{(1-x-γ})]O₂ (0 ≤ x < 0.5, 0 < γ < 1, 0 < 1 - x - γ), Li[LiₓCo₍₁₋ₓ₎]O₂ (0 ≤ x < 0.5), Li[LiₓNi_{γ}Mn_{(1-x-γ})]O₂ (0 ≤ x < 0.5, 0 < γ < 1, 0 < 1 - x - γ), Li[LiₓNi_{γ}Mn_{β}Co_{(1-x-γ-β})]O₂ (0 ≤ x < 0.5, 0 < γ, 0 < β, 0.5 < γ + β < 1, 0 < 1 - x - γ - β), and Li[LiₓNi_{γ}Co_{β}Al_{(1-x-γ-β})]O₂ (0 ≤ x < 0.5, 0 < γ, 0 < β, 0.5 < γ + β < 1, 0 < 1 - x - γ - β). Examples of the lithium-transition metal composite oxides that have a spinel-type crystal structure include LiₓMn₂O₄ and LiₓNi_{γ}Mn_{(2-γ})O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. One of these materials may be used alone, or two or more of these materials may be used in combination.

Among these materials, as the substance capable of occluding and releasing charge transport ions, a lithium transition metal composite oxide having an α-NaFeO₂-type crystal structure or a spinel-type crystal structure is preferable; a lithium transition metal composite oxide having an α-NaFeO₂-type crystal structure is more preferable; and Li[LiₓNi_{γ}Mn_{β}Co_{(1-x-γ-β})]O₂ (0 ≤ x < 0.5, 0 < γ, 0 < β, 0.5 < γ + β < 1, 0 < 1 - x - γ - β) is still more preferable. In the above Li[LiₓNi_{γ}Mn₆Co_{(1-x-γ}-_{β)}]O₂, for example, 0.1 ≤ γ < 0.9 and 0.1 ≤ β < 0.9 are preferable. When such a substance is used, the effect of improving the input by the tungsten element is particularly sufficiently exhibited.

The positive active material may further contain a transition metal element other than the tungsten element. When a lithium transition metal composite oxide, a polyanion compound, or the like is used as the substance capable of occluding and releasing charge transport ions, the positive active material further contains a transition metal element other than the tungsten element. The content of the tungsten element with respect to the transition metal element other than the tungsten element in the positive active material is preferably 0.2 mol% or more and 3 mol% or less, and more preferably 0.5 mol% or more and 2 mol% or less. By setting the content of the tungsten element to the above lower limit or more, the effect of the tungsten element in the positive active material is sufficiently exhibited, and the initial input further increases. On the other hand, by setting the content of the tungsten element to the above upper limit or less, the ion conductivity of the positive active material is enhanced, and as a result, the initial input further increases.

The content of the positive active material in the positive active material layer is preferably 50% by mass or more and 99% by mass or less, more preferably 70% by mass or more and 98% by mass or less, and still more preferably 80% by mass or more and 95% by mass or less. When the content of the positive active material falls within the range mentioned above, a balance can be achieved between the high energy density and productivity of the positive active material layer.

The positive active material is typically particles (powder). The average particle size of the positive active material is preferably 0.1 pm or more and 20 pm or less, for example. When the average particle size of the positive active material is equal to or more than the lower limit mentioned above, the positive active material is easily manufactured or handled. When the average particle size of the positive active material is equal to or less than the upper limit mentioned above, the electron conductivity of the positive active material layer is improved. It is to be noted that in the case of using a composite of the positive active material and another material, the average particle size of the composite is regarded as the average particle size of the positive active material. The "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used in order to obtain a powder with a predetermined particle size. Examples of a crushing method include a method in which a mortar, a ball mill, a sand mill, a vibratory ball mill, a planetary ball mill, a jet mill, a counter jet mill, a whirling airflow type jet mill, or a sieve or the like is used. At the time of crushing, wet-type crushing in coexistence of water or an organic solvent such as hexane can also be used. As a classification method, a sieve or a wind force classifier or the like is used based on the necessity both in dry manner and in wet manner.

The conductive agent is not particularly limited as long as it is a material exhibiting conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a material in which carbon black and CNT are composited may be used. Among these, carbon black is preferable from the viewpoint of electron conductivity and coatability, and in particular, acetylene black is preferable.

The content of the conductive agent in the positive active material layer is preferably 1% by mass or more and 10% by mass or less, and more preferably 3% by mass or more and 9% by mass or less. By setting the content of the conductive agent to the above range, the energy density of the secondary battery can be increased.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 0.5% by mass or more and 10% by mass or less, and more preferably 1% by mass or more and 9% by mass or less. By setting the content of the binder in the above range, the active material can be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance.

The content of the thickener in the positive active material layer may be, for example, 0.1% by mass or more and 6% by mass or less, or may be 0.5% by mass or more and 3% by mass or less. The content of the thickener in the positive active material layer may be 1% by mass or less, and the positive active material layer may not contain the thickener.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The content of the filler in the positive active material layer may be, for example, 0.1% by mass or more and 8% by mass or less, or may be 0.5% by mass or more and 5% by mass or less. The content of the filler in the positive active material layer may be 3% by mass or less, or may be 1% by mass or less, and the filler may not be contained in the positive active material layer.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, and Nb as a component other than the positive active material, the conductive agent, the binder, the thickener, and the filler.

The mass per unit area of the positive active material layer is not particularly limited, but is, for example, 5.0 mg/cm² or more and 15 mg/cm² or less. The lower limit of the mass per unit area of the positive active material layer is preferably 5.5 mg/cm², and more preferably 5.8 mg/cm² or 6.0 mg/cm². In some aspects, the mass per unit area of the positive active material layer may be, for example, 6.5 mg/cm² or more, or 7.0 mg/cm² or more. The upper limit of the mass per unit area of the positive active material layer is preferably 12 mg/cm², and more preferably 10 mg/cm². In the nonaqueous electrolyte energy storage device including the positive active material layer in which the mass per unit area is in the above range, the effect of application of the present configuration can be more suitably exhibited. Here, "the mass per unit area of the positive active material layer" refers to a mass per unit area of one positive active material layer. For example, when the positive electrode has a positive substrate with the positive active material layer provided on each of both surfaces of the positive substrate, "the mass per unit area of the positive active material layer" is a mass per unit area of the positive active material layer on one of the surfaces.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, and particularly preferably 5 pm or more and 20 pm or less. The average thickness of the negative substrate falls within the range mentioned above, thereby allowing the energy density per volume of the secondary battery to be increased while increasing the strength of the negative substrate.

The negative active material layer contains a negative active material. The negative active material layer includes optional components such as a conductive agent, a binder, a thickener, and a filler, if necessary.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As the negative active material for a lithium ion secondary battery, a material capable of occluding and releasing lithium ions is usually used. Examples of the negative active material include metal Li; metals or metalloids such as Si and Sn; metal oxides or metalloid oxides such as a Si oxide, a Ti oxide, and a Sn oxide; titanium-containing oxides such as Li₄Ti₅O₁₂, LiTiO₂, and TiNb₂O₇; a polyphosphoric acid compound; silicon carbide; and carbon materials such as graphite and non-graphitic carbon (easily graphitizable carbon or hardly graphitizable carbon). Among these materials, graphite, and non-graphitic carbon are preferable, and graphite is more preferable. In the negative active material layer, one of these materials may be used alone, or two or more thereof may be used in mixture.

The term "graphite" refers to a carbon material in which an average lattice spacing (d₀₀₂) of the (002) plane determined by an X-ray diffraction method before charge-discharge or in a discharge state is 0.33 nm or more and less than 0.34 nm. Examples of the graphite include natural graphite and artificial graphite. Artificial graphite is preferable from the viewpoint that a material having stable physical properties can be obtained. From the viewpoint that the crystallinity is high, the discharge capacity per mass of the negative active material increases, and the initial input also increases, natural graphite is preferable.

The term "non-graphitic carbon" refers to a carbon material in which the average lattice spacing (d₀₀₂) of the (002) plane determined by the X-ray diffraction method before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.6 V or higher in a half cell that has, as a working electrode, a negative electrode including a carbon material as a negative active material, and has metal Li as a counter electrode.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or more than the lower limit mentioned above, the negative active material is easily produced or handled. By setting the average particle size of the negative active material to be equal to or less than the upper limit mentioned above, the electron conductivity of the negative active material layer is improved. A crusher, a classifier, or the like is used in order to obtain a powder with a predetermined particle size. The crushing method and classification method can be selected from, for example, the methods exemplified for the positive electrode. When the negative active material is a metal such as metal Li, the negative active material layer may have the form of a foil.

The content of the negative active material in the negative active material layer is preferably 60% by mass or more and 99.5% by mass or less, more preferably 90% by mass or more and 99% by mass or less. The content of the negative active material falls within the range mentioned above, thereby allowing a balance to be achieved between the increased energy density and manufacturability of the negative active material layer.

The conductive agent, the binder, the thickener, the filler, and the like, which are optional components in the negative active material layer, can be selected from the materials exemplified for the positive electrode.

The content of the conductive agent in the negative active material layer may be 3% by mass or less or 1% by mass or less, and the conductive agent may not be contained in the negative active material layer.

The content of the binder in the negative active material layer is preferably 0.5% by mass or more and 5% by mass or less, and more preferably 0.8% by mass or more and 3% by mass or less.

The content of the thickener in the negative active material layer is, for example, preferably 0.1% by mass or more and 6% by mass or less, and more preferably 0.5% by mass or more and 3% by mass or less.

The content of the filler in the negative active material layer may be, for example, 0.1% by mass or more and 8% by mass or less, or may be 0.5% by mass or more and 5% by mass or less. The content of the filler in the negative active material layer may be 3% by mass or less, or may be 1% by mass or less, and the filler may not be contained in the negative active material layer.

The mass per unit area of the negative active material layer is 3.8 mg/cm² or more and 4.8 mg/cm² or less. The lower limit of the mass per unit area of the negative active material layer is preferably 4.0 mg/cm², and more preferably 4.1 mg/cm² or 4.2 mg/cm². By setting the mass per unit area of the negative active material layer to the above lower limit or more, the input retention ratio after storage in a high temperature environment can be further increased. The upper limit of the mass per unit area of the negative active material layer is preferably 4.7 mg/cm² or 4.6 mg/cm², and more preferably 4.4 mg/cm², 4.3 mg/cm², 4.2 mg/cm² or 4.1 mg/cm² in some cases. By setting the mass per unit area of the negative active material layer to the above upper limit or less, the initial input further increases. In addition, by setting the mass per unit area of the negative active material layer to the above upper limit or less, the input retention ratio after storage in a high temperature environment also tends to be improved. The mass per unit area of the negative active material layer can be adjusted by the coating amount per unit area of the negative electrode mixture paste when the negative active material layer is formed, or the like.

The lower limit of the average thickness of the negative active material layer is 30 pm, preferably 32 pm, and more preferably 34 pm. By setting the average thickness of the negative active material layer to the above lower limit or more, the input retention ratio after storage in a high temperature environment can be further increased. The upper limit of the average thickness of the negative active material layer is preferably 50 pm, more preferably 45 pm, and more preferably 42 pm, 40 pm, 38 pm, 36 pm, or 34 pm in some cases. By setting the average thickness of the negative active material layer to the above upper limit or less, the initial input further increases. In addition, by setting the average thickness of the negative active material layer to the above upper limit or less, the input retention ratio after storage in a high temperature environment also tends to be improved. The average thickness of the negative active material layer can be within a range of equal to or more than any of the above lower limits and equal to or less than any of the above upper limits.

The negative active material layer can have a porosity of, for example, 30% or more and 60% or less. The lower limit of the porosity is preferably 35%, more preferably 38%, still more preferably 40%, and yet still more preferably 42%, 44%, or 46%. By setting the porosity of the negative active material layer to the above lower limit or more, the initial input of the nonaqueous electrolyte energy storage device is further increased, the input retention ratio after storage in a high temperature environment is further enhanced. On the other hand, the upper limit of the porosity is preferably 55%, more preferably 50%, and still more preferably 48% in some cases. By setting the porosity of the negative active material layer to the above upper limit or less, the initial input of the nonaqueous electrolyte energy storage device tends to further increase. The porosity of the negative active material layer can be adjusted by the particle size of the negative active material, the presence or absence of pressing during production, the pressure of pressing, and the like.

### (Relationship between positive active material layer and negative active material layer)

The lower limit of the ratio of the mass per unit area of the negative active material layer to the mass of tungsten element per unit area contained in the positive active material layer is preferably 30, and more preferably 32, 34, 36, 40, or 50 in some cases. By setting this ratio to the above lower limit or more, the input retention ratio after storage in a high temperature environment tends to be further enhanced. On the other hand, the upper limit of this ratio is preferably 70, and more preferably 60, 50, 45, or 42 in some cases. By setting this ratio to be equal to or less than the upper limit, the initial input tends to further increase. This ratio can be within a range of equal to or more than any of the above lower limits and equal to or less than any of the above upper limits.

The ratio of the mass per unit area of the negative active material layer to the mass of tungsten element per unit area contained in the positive active material layer can be adjusted by the content of the tungsten element in the positive active material, the mass per unit area (applied mass) of the positive active material layer and the negative active material layer, and the like.

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less when the temperature is raised from room temperature to 500°C in an air atmosphere at 1 atm, and more preferably have a mass loss of 5% or less when the temperature is raised from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, a simple substance or a complex of these substances may be used singly, or two or more thereof may be used in mixture. Among these inorganic compounds, silicon oxide, aluminum oxide, or aluminosilicate is preferable from the viewpoint of safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel containing a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used concurrently with a porous resin film, a nonwoven fabric, or the like as described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some hydrogen atoms contained in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. In a case where a cyclic carbonate and a chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these, a lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these, inorganic lithium salts are preferable, and LiPF₆ is more preferable.

When LiPF₆ is contained in the nonaqueous electrolyte solution, it is easy to generate HF by reacting LiPF₆ with water slightly present in the nonaqueous electrolyte solution. It is considered that the presence of HF in the nonaqueous electrolyte solution promotes elution of tungsten element from the positive active material into the nonaqueous electrolyte solution. In addition, when an electrolyte salt having an anion containing a fluorine element, an oxygen element, and a phosphorus element, such as LiPO₂F₂ and lithium bis(oxalate)difluorophosphate (LiFOP), is present in the nonaqueous electrolyte solution, it is considered that elution of the tungsten element from the positive active material into the nonaqueous electrolyte solution is further promoted. Therefore, when the nonaqueous electrolyte energy storage device using the nonaqueous electrolyte solution containing such a component is one embodiment of the present invention, the effect of increasing the input after storage in a high temperature environment is particularly remarkable. The content of the electrolyte salt having an anion containing a fluorine element, an oxygen element, and a phosphorus element in the nonaqueous electrolyte solution may be, at 20°C and 1 atm, for example, 0.01 mol/dm³ or more and 0.5 mol/dm³ or less, 0.03 mol/dm³ or more and 0.3 mol/dm³ or less, or 0.05 mol/dm³ or more and 0.2 mol/dm³ or less.

The content of the electrolyte salt in the nonaqueous electrolyte solution is, at 20°C and 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. The content of the electrolyte salt falls within the range mentioned above, thereby allowing the ionic conductivity of the nonaqueous electrolyte solution to be increased.

The nonaqueous electrolyte solution may include an additive, besides the nonaqueous solvent and the electrolyte salt. Examples of the additive include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, and tetrakistrimethylsilyl titanate. These additives may be used singly, or in mixture of two or more thereof.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. When the content of the additive falls within the above range, thereby making it possible to improve capacity retention performance or cycle performance after high-temperature storage, and to further improve safety.

As the nonaqueous electrolyte, a solid electrolyte may be used, or a nonaqueous electrolyte solution and a solid electrolyte may be used in combination.

The solid electrolyte can be selected from any material with ionic conductivity, which is solid at normal temperature (for example, 15°C to 25°C), such as lithium, sodium and calcium. Examples of the solid electrolyte include sulfide solid electrolytes, oxide solid electrolytes, nitride solid electrolytes, and polymer solid electrolytes.

Examples of the lithium ion secondary battery include Li₂S-P₂S₅, LiI-Li₂S-P₂S₅, and Li₁₀Ge-P₂S₁₂ as the sulfide solid electrolyte.

The shape of the nonaqueous electrolyte energy storage device according to the present embodiment is not particularly limited, and examples thereof include cylindrical batteries, prismatic batteries, flat batteries, coin batteries, and button batteries.

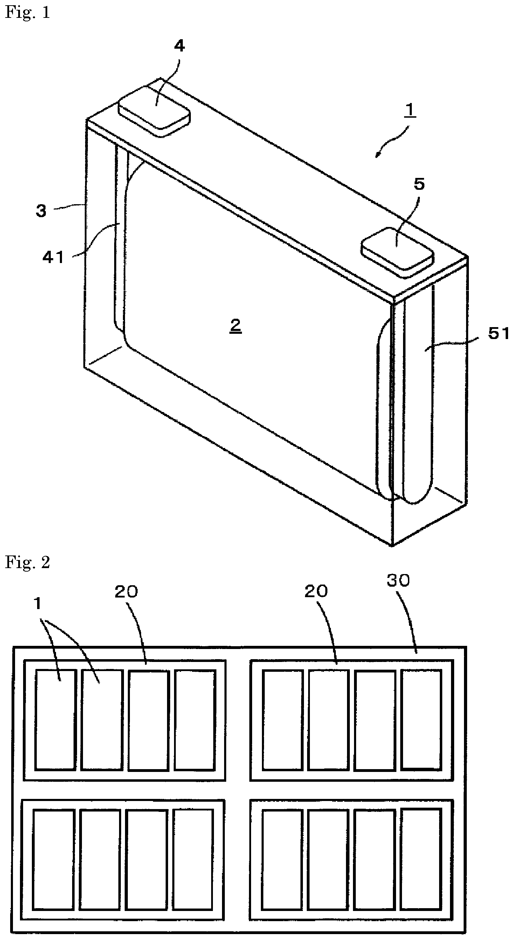

Fig. 1 illustrates a nonaqueous electrolyte energy storage device 1 as an example of prismatic batteries. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted as an energy storage unit (battery module) configured by assembling a plurality of nonaqueous electrolyte energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage unit.

Fig. 2 shows an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Method for manufacturing nonaqueous electrolyte energy storage device>

A method for manufacturing the nonaqueous electrolyte energy storage device according to the present embodiment can be appropriately selected from publicly known methods. The manufacturing method includes, for example, preparing an electrode assembly, preparing a nonaqueous electrolyte, and housing the electrode assembly and the nonaqueous electrolyte in a case. Preparing the electrode assembly includes: preparing a positive electrode and a negative electrode, and forming an electrode assembly by stacking or winding the positive electrode and the negative electrode with a separator interposed therebetween.

The positive electrode can be prepared, for example, by applying a positive composite paste to a positive substrate directly or via an intermediate layer, followed by drying. The positive composite paste contains components constituting a positive active material layer such as a positive active material, and a dispersion medium. The applied positive composite paste may be dried and then pressed or the like.

The negative electrode can be prepared, for example, by applying a negative composite paste to a negative substrate directly or via an intermediate layer, followed by drying. The negative composite paste contains components constituting the negative active material layer, such as a negative active material, and a dispersion medium. The applied negative composite paste may be dried and then pressed or the like. The porosity of the negative active material layer to be formed can be adjusted by the presence or absence of pressing, the pressure of pressing, and the like.

Housing the nonaqueous electrolyte in a case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed.

### <Other embodiments>

The nonaqueous electrolyte energy storage device according to the present invention is not limited to the embodiment described above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to one embodiment can be deleted. In addition, a well-known technique can be added to the configuration according to one embodiment.

While a case where the nonaqueous electrolyte energy storage device is used as a nonaqueous electrolyte secondary battery (lithium ion secondary battery) that is chargeable and dischargeable has been described in the embodiment mentioned above, the type, shape, dimensions, capacity, and the like of the nonaqueous electrolyte energy storage device are arbitrary. The present invention can also be applied to various secondary batteries, and capacitors such as electric double layer capacitors and lithium ion capacitors.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

### EXAMPLES

Hereinafter, the present invention will be described in more detail with reference to Examples, but the present invention is not limited to the following Examples.

### [Example 1]

### (Fabrication of positive electrode)

A positive active material was prepared in which tungsten oxide was deposited on the particle surface of LiNi_{1/3}Mn_{1/3}Co_{1/3}O₂. The content of the tungsten element with respect to a transition metal element other than the tungsten element in the positive active material was 1 mol%.

A positive composite paste was prepared using the positive active material, acetylene black (AB) as a conductive agent, a polyvinylidene fluoride (PVDF) as a binder, and an N-methylpyrrolidone (NMP) as a dispersion medium. It is to be noted that the mass ratios of the positive active material, AB, and PVDF were set to be 93 : 5 : 2 (in terms of solid content). The positive composite paste was applied to both surfaces of an aluminum foil as a positive substrate such that the applied mass (mass of the solid content) was 7.2 mg/cm², and dried. Thereafter, roll pressing was performed to obtain a positive electrode with the positive active material layer stacked on both surfaces of the positive electrode substrate.

### (Fabrication of negative electrode)

Graphite as a negative active material, a styrene-butadiene rubber (SBR) as a binder, carboxymethyl cellulose (CMC) as a thickener, and water as a dispersion medium were used to prepare a negative composite paste. It is to be noted that the mass ratios of graphite, SBR, and CMC were set to be 98.5 : 1 : 0.5 (in terms of solid content). The negative composite paste was applied to both surfaces of a copper foil as a negative substrate such that the applied mass (mass of the solid content) was 4.42 mg/cm², and dried. Thereafter, roll pressing was performed to obtain a negative electrode with the negative active material layer stacked on both surfaces of the negative substrate. The mass per unit area (that is, applied mass) of the negative active material layer was 4.42 mg/cm², the average thickness was 37 pm, and the porosity was 46%. The ratio of the mass per unit area of the negative active material layer to the mass of tungsten element per unit area contained in the positive active material layer was 37.

### (Nonaqueous electrolyte solution)

LiPF₆ was dissolved at a concentration of 1.2 mol/dm³ in a solvent obtained by mixing an ethylene carbonate and an ethyl methyl carbonate at a volume ratio of 30 : 70 and LiPO₂F₂ was dissolved at a concentration of 1.0% by mass to obtain a nonaqueous electrolyte solution.

### (Separator)

A polyolefin microporous membrane was used for the separator.

### (Assembly of nonaqueous electrolyte energy storage device)

The positive electrode, the negative electrode, and the separator were used to obtain a wound electrode assembly. The electrode assembly was housed in a case, the nonaqueous electrolyte solution was injected into the case, and the case was sealed to obtain a nonaqueous electrolyte energy storage device according to Example 1.

### [Examples 2 to 8 and Comparative Examples 1 to 9]

Nonaqueous electrolyte energy storage devices of Examples 2 to 8 and Comparative Examples 1 to 9 were obtained similarly as in Example 1 except that the type of the positive active material, the mass per unit area, the average thickness and the porosity of the negative active material layer, and the ratio of the mass per unit area of the negative active material layer to the mass of tungsten element per unit area contained in the positive active material layer (ratio (negative electrode/W)) were set as shown in Tables 1 to 3. The ratio (negative electrode/W) was adjusted by adjusting the mass per unit area (applied mass) of the positive active material layer and the negative active material layer.

"Presence" in the column of "Presence or absence of positive active material W (tungsten element)" in Tables 1 to 3 indicates the positive active material used in Example 1 described above, and "Absence" indicates LiNi_{1/3}Mn_{1/3}Co_{1/3}O₂ containing no tungsten element. The average thickness and porosity of the negative active material layer were adjusted by changing the applied mass (mass per unit area of the negative active material layer) and the pressure during pressing. Also, Example 2 is described in each of Tables 1 to 3.

### [Evaluation]

### (1-1) Initial charge-discharge

The obtained respective nonaqueous electrolyte energy storage devices were subjected to the initial charge-discharge under the following conditions. In a thermostatic chamber at 25°C, the nonaqueous electrolyte energy storage devices were subjected to constant current charge at a charge current of 1.0 C and an end-of-charge voltage of 4.10 V, and then to constant voltage charge at 4.10 V. With regard to the charge termination conditions, the charge was performed until the total charge time reached 3 hours. Thereafter, a pause of 10 minutes was provided. The energy storage devices were subjected to constant current discharge at a discharge current of 1.0 C and an end-of-discharge voltage of 3.0 V.

### (1-2) Measurement of initial input

The respective nonaqueous electrolyte energy storage device after the initial charge-discharge were subjected to constant current charge at a charge current of 1.0 C in a thermostatic layer at 25°C to adjust the SOC to 50%, stored in a thermostatic chamber at -30°C for 4 hours, and then charged at a constant current of 5 C, 10 C, 15 C, 20 C, or 25 C for 10 seconds. After completion of each charge, constant current discharge was performed at a current of 1.0 C to set the SOC to 50%. After completion of each charge, constant current discharge was performed at a current of 1.0 C to set the SOC to 50%. The resistance value was calculated from the slope of the current in each charge and the voltage 1 second after the start of charge, and "{difference between voltage before charge and upper limit voltage (4.3 V)}/resistance value × upper limit voltage (4.3 V)" was determined, and used as an initial input. The input is energy (power) that can be taken in per unit time.

### (1-3) Measurement of input retention ratio after storage in high temperature environment

Subsequently, the respective nonaqueous electrolyte energy storage devices were each subjected to constant current constant voltage charge at a charge current of 1.0 C in a thermostatic chamber at 25°C to set the SOC of 80%. The respective nonaqueous electrolyte energy storage devices were stored in a thermostatic chamber at 80°C for 10 days in the state of SOC of 80%. Thereafter, the respective nonaqueous electrolyte energy storage devices were stored in a thermostatic chamber at 25°C for 3 hours or more, and subjected to constant current discharge at a discharge current of 01.0 C and an end-of-discharge voltage of 3.0 V, then the input was obtained in the same manner as in the initial input, and the obtained input was used as an input after storage. The percentage of the input after storage with respect to the initial input was obtained as an input retention ratio (input retention ratio after storage in a high temperature environment).

The initial input and the input retention ratio in the respective nonaqueous electrolyte energy storage devices are shown in Tables 1 to 3.

**[Table 1]**

| | Positive active material layer | Negative active material layer | | | Ratio (negative electrode/W)* | Evaluation | |
|---|---|---|---|---|---|---|---|
| | Presence or absence of positive active material W | Mass per unit area (mg/cm²) | Average thickness (µm) | Porosity (%) | | Initial input (W) | Input retention ratio (%) |
| Comparative Example 1 | Presence | 5.00 | 42 | 46 | 37 | 117 | 68.4 |
| Example 1 | | 4.42 | 37 | 46 | | 126 | 82.5 |
| Example 2 | | 4.20 | 35 | 46 | | 130 | 86.2 |
| Example 3 | | 3.80 | 32 | 46 | | 138 | 84.8 |
| Comparative Example 2 | | 3.48 | 29 | 46 | | 146 | 79.5 |
| Comparative Example 3 | | 2.98 | 25 | 46 | | 161 | 73.9 |
| Comparative Example 4 | | 3.48 | 36 | 56 | | 151 | 71.5 |
| Comparative Example 5 | Absence | 5.00 | 42 | 46 | | 90 | 78.9 |
| Comparative Example 6 | | 4.80 | 40 | 46 | | 92 | 84.8 |
| Comparative Example 7 | | 4.20 | 35 | 46 | | 100 | 90.0 |
| Comparative Example 8 | | 3.48 | 29 | 46 | | 112 | 91.1 |

| | | | | | | | |
|---|---|---|---|---|---|---|---|
| *Ratio of the mass per unit area of the negative active material layer to the mass of W element per unit area contained in the positive active material layer | | | | | | | |

**[Table 2]**

| | Positive active material layer | Negative active material layer | | | Ratio (negative electrode/W)* | Evaluation | |
|---|---|---|---|---|---|---|---|
| | Presence or absence of positive active material W | Mass per unit area (mg/cm²) | Average thickness (µm) | Porosity (%) | | Initial input (W) | Input retention ratio (%) |
| Comparative Example 9 | Presence | 4.20 | 29 | 35 | 37 | 126 | 80.2 |
| Example 4 | | | 32 | 40 | | 129 | 85.3 |
| Example 2 | | | 35 | 46 | | 130 | 86.2 |
| Example 5 | | | 38 | 50 | | 128 | 86.7 |

| | | | | | | | |
|---|---|---|---|---|---|---|---|
| *Ratio of the mass per unit area of the negative active material layer to the mass of W element per unit area contained in the positive active material layer | | | | | | | |

**[Table 3]**

| | Positive active material layer | Negative active material layer | | | Ratio (negative electrode/W)* | Evaluation | |
|---|---|---|---|---|---|---|---|
| | Presence or absence of positive active material W | Mass per unit area (mg/cm²) | Average thickness (µm) | Porosity (%) | | Initial input (W) | Input retention ratio (%) |
| Example 6 | Presence | 4.20 | 35 | 46 | 25 | 124 | 81.5 |
| Example 7 | | 4.30 | 36 | | 35 | 126 | 86.5 |
| Example 2 | | 4.20 | 35 | | 37 | 130 | 86.2 |
| Example 8 | | 4.20 | 35 | | 66 | 119 | 93.3 |

| | | | | | | | |
|---|---|---|---|---|---|---|---|
| *Ratio of the mass per unit area of the negative active material layer to the mass of W element per unit area contained in the positive active material layer | | | | | | | |

As shown in Table 1, in the respective nonaqueous electrolyte energy storage devices of Comparative Examples 5 to 8 in which the positive active material does not contain a tungsten element, the initial input is small. In the respective nonaqueous electrolyte energy storage devices of Comparative Examples 2 to 4 in which the positive active material contains a tungsten element and the mass per unit area of the negative active material layer is less than 3.8 mg/cm², although the initial input is large, the input retention ratio is low. In the nonaqueous electrolyte energy storage device of Comparative Example 1 in which the positive active material contains a tungsten element and the mass per unit area of the negative active material layer exceeds 4.8 mg/cm², the initial input is slightly small and the input retention ratio is low. On the other hand, in the respective nonaqueous electrolyte energy storage devices of Examples 1 to 3 in which the positive active material contained a tungsten element, the mass per unit area of the negative active material layer was 3.8 mg/cm² or more and 4.8 mg/cm² or less, and the average thickness of the negative active material layer was 30 pm or more, the initial input was large as 118 W or more, and the input retention ratio was high as 81.0% or more. In addition, as shown in Tables 2 and 3, it is found that the porosity of the negative active material layer and the ratio of the mass per unit area of the negative active material layer to the mass of tungsten element per unit area contained in the positive active material layer are increased, whereby the input retention ratio is further enhanced. As shown in Table 1, in the respective nonaqueous electrolyte energy storage devices of Comparative Examples 5 to 8 in which the positive active material contained no tungsten element, the input retention ratio increased as the mass per unit area of the negative active material layer decreased. On the other hand, in the respective nonaqueous electrolyte energy storage devices of Examples 1 to 3 and Comparative Examples 1 to 3 in which the positive active material contained a tungsten element, the input retention ratio tended to decrease regardless of whether the mass per unit area of the negative active material layer was too large or too small, and the input retention ratio increased when the mass per unit area of the negative active material layer increased in the range of 3.8 mg/cm² or more and 4.8 mg/cm² or less. From this, it was confirmed that the effect of improving the input retention ratio by specifying the mass per unit area of the negative active material layer in the range of 3.8 mg/cm² or more and 4.8 mg/cm² or less is specifically exhibited when the positive active material contains a tungsten element.

### INDUSTRIAL APPLICABILITY

The present invention can be applied to nonaqueous electrolyte energy storage devices and the like for use as power sources for electronic devices such as personal computers and communication terminals, and automobiles and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising:
a positive electrode having a positive active material layer; and
a negative electrode having a negative active material layer;
wherein the positive active material layer contains a positive active material containing a tungsten element,
a mass per unit area of the negative active material layer is 3.8 mg/cm² or more and 4.8 mg/cm² or less, and
the negative active material layer has an average thickness of 30 pm or more.

2. The nonaqueous electrolyte energy storage device according to claim 1, wherein a ratio of a mass per unit area of the negative active material layer to a mass of the tungsten element per unit area contained in the positive active material layer is 30 or more.

3. The nonaqueous electrolyte energy storage device according to claim 1 or 2, wherein the negative active material layer has a porosity of 40% or more.
